**Europäisches Patentamt**

(19) **European Patent Office**

**Office européen des brevets**

(11) Veröffentlichungsnummer: **0 198 342**
**B1**

(12) # EUROPÄISCHE PATENTSCHRIFT

(45) Veröffentlichungstag der Patentschrift:
**31.01.90**

(51) Int. Cl.⁴: **G 21 C 17/02**

(21) Anmeldenummer: **86104527.6**

(22) Anmeldetag: **03.04.86**

(54) **Verfahren und Vorrichtung zur nuklidspezifischen Überwachung aktiver und hochaktiver Flüssigkeiten, insbesondere des Primärkühlmittels von Siede- und Druckwasserreaktoren.**

(30) Priorität: **04.04.85 DE 3512481**

(43) Veröffentlichungstag der Anmeldung:
**22.10.86 Patentblatt 86/43**

(45) Bekanntmachung des Hinweises auf die Patenterteilung:
**31.01.90 Patentblatt 90/5**

(84) Benannte Vertragsstaaten:
**BE CH DE FR GB IT LI SE**

(56) Entgegenhaltungen:
**DE-A- 1 943 879**
**DE-A- 2 037 796**
**US-A- 4 446 097**

**SIEMENS FORSCHUNGS- UND ENTWICKLUNGSBERICHTE, Band 1, Nr. 4/72, Seiten 350-354, Springer-Verlag, Berlin, DE; K.H. NEEB et al.: "Radiochemische Analyse des Primärkühlmittels wassergekühlter Kernreaktoren mit Hilfe eines Ge(Li)-Detektors"**
**INTERNATIONAL JOURNAL OF APPLIED RADIATION AND ISOTOPES, Band 34, Nr. 2, Februar 1983, Seiten 501-507, Pergamon Press Ltd., Oxford, GB; A. ANDAI et al.: "Pile-up rejection live-time correction unit for precision gamma-ray spectrometry"**
**IEEE TRANSACTIONS ON NUCLEAR SCIENCE, Band NS-24, Nr. 1, Februar 1971, pages 771-777; D.C. UNION et al: "Microprocessor-based radiation monitoring systems"**

(73) Patentinhaber: **ABB Reaktor GmbH, Dudenstrasse 44, D-6800 Mannheim 1 (DE)**

(72) Erfinder: **Paffrath, Dr., Gartenstrasse 31, D-6521 Hohen-Sülzen (DE)**
Erfinder: **Haag, Dr., August-Hermann-Frank-Strasse 11, D-6520 Worms (DE)**
Erfinder: **Hanstein, Willi, Wormer Strasse 9, D-6900 Heidelberg-Wieblingen (DE)**

ACTORUM AG

**Beschreibung**

Die Erfindung betrifft ein Verfahren und eine Vorrichtung zur nuklidspezifischen Überwachung aktiver und hochaktiver Flüssigkeiten, insbesondere des Primärkühlmittels von Siede- und Druckwasserreaktoren, bei dem die Aktivitätskonzentration direkt gemessen wird.

Ein derartiges Verfahren ist aus der DE-A-1 943 879 bekannt. Dort wird zum Nachweis von Defekten in Brennelementen an einem zugänglichen Abschnitt einer Primärleitung ein hochauflösender Ge-Detektor angebracht.

Das Verfahren und die Vorrichtung dienen vorzugsweise zur Überwachung der Aktivitätsinhalte des Primärkühlmittels von Siede- und Druckwasserreaktoren bei Normalbetrieb, bei Lasttransienten und bei Störfällen, wobei die unterschiedlichen Betriebssituationen durch typische spezielle Betriebsparameter berücksichtigt werden.

Im Normalbetrieb des Siede- und Druckwasserreaktors liegen konstante physikalische, chemische, reaktorphysikalische und betriebliche Reaktorparameter vor. Zur Überwachung sind insbesondere die Spalt- und Aktivierungsprodukte zur Ermittlung von korrosiven und erosiven Unregelmäßigkeiten und Anzeichen für das Auftreten von Brennelementdefekten zu berücksichtigen. Ausgehend von diesbezüglichen Meßwerten können Brennelementdefektabschätzungen durchgeführt und Vorsorgemaßnahmen für eventuell notwendige Abschaltungen eingeleitet werden, damit die Emission von Radionukliden i.S. § 28 (2) Strl. Sch. VO. niedrig zu halten.

Lasttransienten des Siede- und Druckwasserreaktors liegen beim An- und Abfahren des Reaktors sowie bei Reaktorschnellabschaltung (RESA) vor und führen zu erhöhten Aktivitätsfreisetzungen, insbesondere Jodspiking, von Spalt- und Aktivierungsprodukten.

Die Primärkühlmittelüberwachung im Störfall soll die Meßwerte zur Vermeidung oder Minimierung des Austretens von Aktivität liefern und soll die Wirksamkeit betrieblicher Maßnahmen zur Absenkung der Aktivitätskonzentration und der vorgegebene Grenzwerte kontrollieren.

Im Primärkühlmittel sind mehrere Aktivitätsgruppen in extrem unterschiedlichen Konzentrationen von einigen Dekaden enthalten. Diese Aktivitätsgruppen bestehen aus Edelgasen, Spaltprodukten, insbesondere Jod und Cäsium, und Aktivierungsprodukten. Über die Nuklidgruppen Edelgas- und Jodisotope erhält man Informationen zur Defektindikation, zur Emissionsentwicklung, für den Arbeitsschutz und für die spezifischen Grenzwerte, während die Aktivierungsprodukte die Erkennung von Korrosions- und Erosionseffekten, die Überwachung der Kühlmittelchemie und der Grenzwerte für das BE-Becken erlauben.

Bisher ist es üblich, die Primärkühlmittelaktivität durch Handprobennahme zu überwachen. Als nachteilig ist dabei anzusehen, daß die Entnahme der Proben, ihre chemische Aufbereitung sowie die Messung in Labormeßplätzen eine erhebliche Dosisbelastung des Personals verursachen. Typische Probenahmefrequenzen liegen im Bereich von 1 bis 7 Proben pro Woche, wobei aufgrund der Probenbehandlung eine Meßwertverfälschung durch einen gewissen Edelgasverlust auftritt. Aufgrund der üblichen Meßfrequenz ist es bisher unmöglich, schnelle Veränderungen, z.B. Spiking, in ihrem zeitlichen Ablauf zu verfolgen. Um mit Handprobennahme bei An- und Abfahrprogrammen eine ausreichende Meßfrequenz zu erzielen, sind besondere Meßprogramme mit hoher Dosisbelastung für zwei bis drei Laboranten nötig, wobei selbst bei Einsatz von zwei Meßplätzen kein geringerer zeitlicher Abstand als 30 Minuten erzielt werden kann. Diese Meßfrequenz reduziert sich bei unvorhergesehenen Ablaufstörungen auf höchstens eine Probe in 2 Stunden. Demzufolge ist die Überwachung der Primärkühlmittelaktivität durch Handprobennahme zur Überwachung von dynamischen Phasen nicht geeignet.

Mit Hilfe sogenannter «In-line»-oder«On-line»-Verfahren, die von K.H. Neep in BMFT-FPK-73-11 und von K.H. Neep und S. Hiller in VGB Kraftwerkstechnik 54, Heft 12, Dezember 1974, Seite 821 ff. beschrieben werden, hat man bereits versucht, die Primärkühlmittelüberwachung zu automatisieren. Die in diesem Verfahren verwendete «In-line-Nuklidauftrennung» ist in der DE-OS 2 037 796 beschrieben. Als nachteilig sind bei diesem Verfahren die Meßstreckenkontamination mit daraus resultierenden hohen Abfallmengen und erheblicher Personendosis bei Dekontamination, die niedrige Meßfrequenz aufgrund geringer Zählratendynamik und daraus resultierender Halbwertszeitanalyse und eine geringe Empfindlichkeit für Energien unter 400 KeV aufgrund der Abschirmung durch die Kühlmittelleitungen anzusehen. Es besteht daher ein Bedürfnis, bei minimaler Dosisbelastung und geringerer Abfallmenge in jeder Betriebssituation alle notwendigen Daten zu ermitteln, um die Überwachung vorgegebener Grenzwerte zu ermöglichen, deren Überschreitung Folgen und Maßnahmen auslöst, wie z.B. für Jod-131 und weitere Spaltprodukte (Auslegungsfreisetzungen), und um Aktivitätskonzentrationen für Spalt- und Aktivierungsprodukte vor der Durchführung von Arbeiten und anderen betrieblichen Maßnahmen zur geringstmöglichen Belastung des Personals unter vorgegebene Grenzwerte kontrolliert herabzusetzen.

Der Erfindung liegt die Aufgabe zugrunde, ein Verfahren und eine Vorrichtung der eingangs genannten Art zu schaffen, mit dem quasi kontinuierlichen Aktivitätsmengen bzw. Aktivitätskonzentrationen in radioaktiven Flüssigkeiten mit konstanten und/oder veränderlichen Zusammensetzungen zuverlässig und sicher isotopenspezifisch überwacht werden können.

Erfindungsgemäß wird diese Aufgabe verfahrensseitig dadurch gelöst, daß abhängig von den kontinuierlich ermittelten Gesamtgammawerten Parameter zur Steuerung eines Probenahmeablaufs bestimmt werden, daß die Parameter mit vorgegebenen Grenzwerten verglichen werden und daraus der Zyklus einer nuklidspezifischen Analyse bestimmt wird und daß Flüssigkeitsproben automatisch entnommen, gehandhabt, chemisch separiert und ausgewertet werden.

Erfindungsgemäß wird die Aufgabe vorrichtungsseitig durch einen zweiten Meßzweig für die automatische zyklische Ermittlung der nuklidspezifischen Aktivitätskonzentrationen von Edelgasen, Spalt- und Aktivierungsprodukten in entnommenen, aufbereiteten und chemisch separierten Proben und durch eine zentrale Prozessoreinheit für die Ablaufsteuerung des zweiten Meßzweiges in Abhängigkeit von den durch den ersten Meßzweig ermittelten Meßwerten gelöst.

Bevorzugte Merkmale, die die Erfindung vorteilhaft weiterbilden, sind in den jeweils nachgeordneten Ansprüchen enthalten.

Die Erfindung ermöglicht in vorteilhafter Weise aufgrund der Kombination von kontinuierlicher direkter Gesamtgammaüberwachung und automatischer Probennahme für die quasi kontinuierliche nuklidspezifische Überwachung eine betriebsangepaßte Frequenz bei minimalen Proben- und Abfallvolumen und bei vernachlässigbarer Personalbelastung. In günstiger Weise wird durch die chemische Probenaufbereitung sichergestellt, daß Nuklidgruppen mit geringerer Aktivität nicht von solchen mit hoher Aktivität verdeckt werden, und daß eine Meßplatzkontamination vermieden wird. Weiterhin garantieren Nulleffektmessungen sowie die Möglichkeit einer automatischen Qualitätsdokumentation konstante Systemparameter, wodurch vorteilhaft je nach Menge des Probenbehältervorrats ein wartungsfreier Betrieb von 1 - 4 Tagen möglich ist. Dabei besteht in günstiger Weise die Möglichkeit, daß Abweichungen als Störung gemeldet werden und eine Rücksetzung der Aktivierungsproduktanalyse in einen definierten und gesicherten Zustand auslösen, wobei bei Wiederinbetriebnahme von dem letzten korrekten Status aus eine definierte Startsituation eingestellt und der Ausfall dokumentiert werden kann.

Die Erfindung eignet sich vorteilhaft für die nuklidspezifische Überwachung aktiver und hochaktiver Flüssigkeiten sowohl auf statische als auch dynamische Aktivitätskonzentrationen, wie zum Beispiel Primärkühlmittel von Kernkraftwerken, Chemikalien zur Brennstoffaufbereitung oder Flüssigabfall. Die vorgesehenen chemischen Trennvorgänge, eine mögliche Selbstüberwachung der Ablaufsteuerung und die automatische Anpassung der Meßfrequenz an die aktuelle Betriebssituation verbunden mit der hohen Präzision in der Probennahme für variable und minimale Probevolumen ermöglichen eine erhebliche Reduktion von Personaldosen und Abfallvolumen.

Gegenüber dem bisher üblichen Verfahren mit Handprobenahme ergibt sich bei der Erfindung eine verkürzte Reaktionszeit von 5 - 10 Minuten gegenüber 2 - 4 Stunden und dadurch eine erhöhte Meßfrequenz von 1 pro 10 Minuten gegenüber 1 pro einigen Stunden.

Durch die kontinuierliche Aktivitätsmessung ist gemäß der Erfindung eine automatische Anpassung an die jeweilige Betriebssituation möglich, da alle relevanten Parameter kurzfristig zur Verfügung stehen, während dies bei der heute üblichen Handprobenentnahme nicht oder nur mit mehrstündiger Verzögerung möglich ist. Alle relevanten Werte können in günstiger Weise nur mit einem Mindestaufwand an Proben- und Datenverarbeitung ohne Personalbelastung bestimmt werden. Vorteilhaft erlaubt der modulare Aufbau von Meßgeräten und das Vorsehen einer geeigneten Ablaufsteuerung die Berücksichtigung anderer spezifischer Parameter, betrieblicher Vereinbarungen und von Betriebsgrenzwerten im Hinblick auf den geometrischen Aufbau, die Probennahmefrequenz, die Grenzwerte für Ablaufänderungen, die Probenarchivierung und die wechselnden Untergrundsituationen am Meßort.

Zur automatischen Durchführung der nuklidspezifischen Überwachung aktiver und hochaktiver Flüssigkeiten, insbesondere des Primärkühlmittels von Siede- und Druckwasserreaktoren sind vorteilhaft zwei Meßzweige vorgesehen, wobei der erste Meßzweig als On-line-Monitor der Probennahmeleitung zur Ermittlung der Zyklus-Parameter für den zweiten Meßzweig dient, und wobei der zweite Meßzweig als isotopenspezifischer Monitor zur Ermittlung der Edelgas-, Spalt- und Aktivierungsproduktaktivitäten vorgesehen ist und vorzugsweise Probenmanipulatoren und Dosiereinheiten mit zugeordneter Ablaufsteuerung seitens einer zentralen Prozessoreinheit vorhanden sind.

Die Erfindung wird nachfolgend anhand der beigefügten Zeichnungen näher erläutert. Es zeigen:

Fig. 1 ein schematisches Blockschaltbild zur Veranschaulichung des ersten Meßzweigs zur kontinuierlichen Gesamtgammamessung;

Fig. 2 ein schematisches Blockschaltbild des zweiten Meßzweiges zur automatischen Aktivierungsproduktanalyse; und

Fig. 3 ein abgewandeltes Gesamtblockschaltbild der Meßzweige zur Durchführung des erfindungsgemäßen Verfahrens.

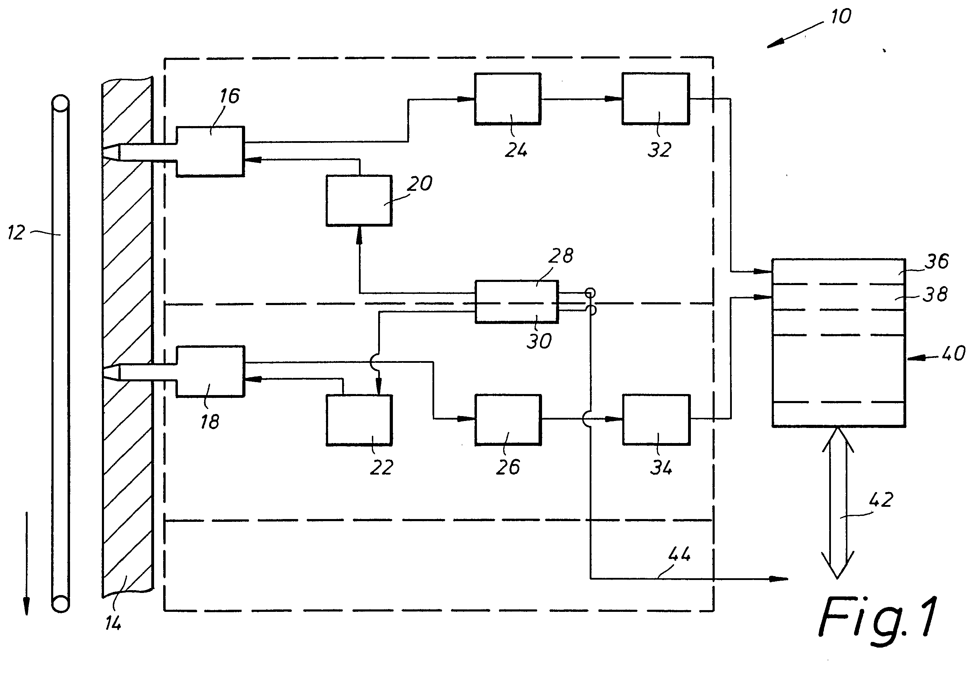

In Fig. 1 ist ein erster Meßzweig 10 zur kontinuierlichen Gesamtgammamessung im Zusammenhang mit einer Probennahmeleitung 12 dargestellt. Die Probennahmeleitung 12 ist in Form eines Bypasses mit dem Primärkühlmittelkreislauf eines nicht dargestellten Siede- oder Druckwasserreaktors verbunden. In einer Bleiabschirmwand 14 sind in zwei Durchgangslöchern mit konisch nach außen zulaufender Mündung Szintillationsdetektoren 16 und 18 eingebaut. Die Detektoren 16 und 18 sind jeweils mit einer extern geregelten Hochspannungsversorgung 20 bzw. 22 sowie mit Impulsverstärkern 24 bzw. 26 verbunden. Eine Stabilisierungseinheit 28 mit Fensterdiskriminator steht mit der extern geregelten Hochspannungsversorgung 20 in Verbindung, während eine Stabilisierungseinheit 30 mit Fensterdiskriminator mit der extern geregelten Hochspannungsversorgung 22 in Verbindung steht. Der erste Meßzweig 10 enthält weiterhin einen Fensterdiskriminator 32 für die Aktivitätsbestimmung, der an den Impulsverstärker 24 angeschlossen ist. Ein Fensterdiskriminator 34 für die Aktivitätsbestimmung ist mit dem Impulsverstärker 26 verbunden. Die Fensterdiskriminatoren 32 und 34 stehen mit Abschnitten 36 und 38 eines rechnergesteuerten Zählers 40 in Verbindung, der seinerseits über eine Datenaustauschleitung mit einer in Fig. 1 nicht dargestellten zentralen Prozessoreinheit verbunden ist. Die Stabilisierungseinheiten 28 und 30 stehen ebenfalls über eine Leitung 44 mit der in Fig. 1 nicht dargestellten zentralen Prozessoreinheit in Verbindung.

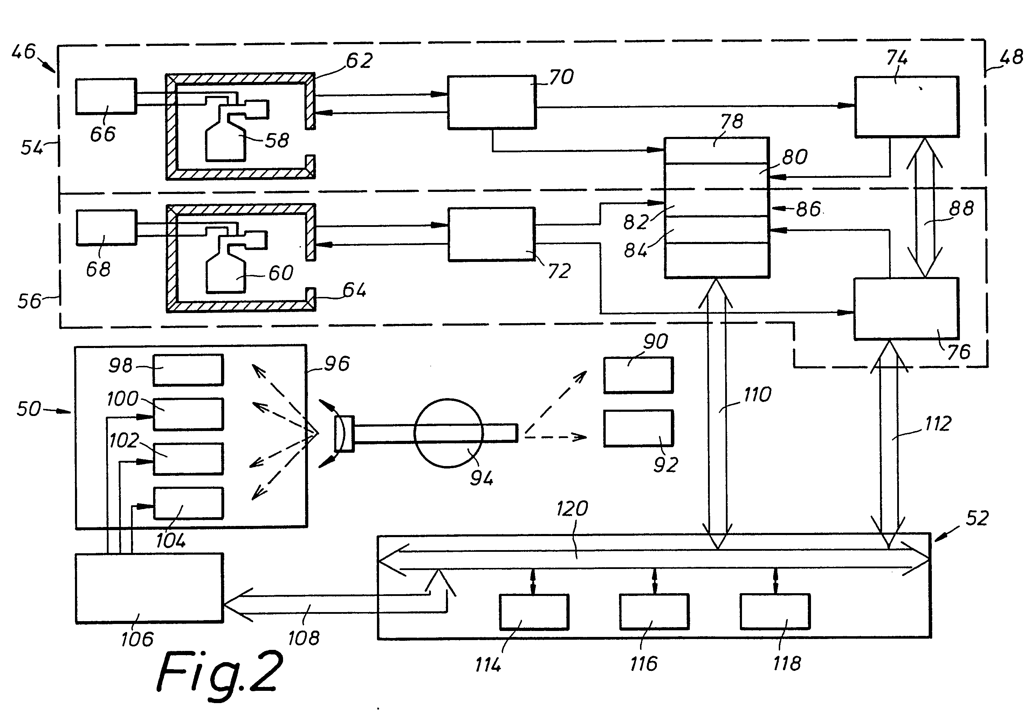

Die beiden Detektoren 16 und 18 sind kleinvolumig ausgebildet und messen kontinuierlich die Gesamtaktivität in der Probennahmeleitung 12 in einem für die Flüssigkeit typischen Energiebereich, der für Primärkühlmittel etwa 300 bis 500 keV beträgt. Die Zahl und Art der Detektoren und die ihnen jeweils zugeordneten Hochspannungsversorgungen und Impulsverstärkerstabilisierungseinheiten sowie Fensterdiskriminatoren können nach den jeweiligen Erfordernissen ausgewählt werden, um mit genügender statistischer Genauigkeit Zustandsänderungen sicher zu erfassen. Für den hier dargestellten Spezialfall der Primärkühlmittelüberwachung sind typischerweise zwei Szintillationsdetektoren mit Stabilisierungseinheiten vorgesehen, die die aktuellen Werte mit dem gleitenden Mittelwert vergleichen. Bei Auftreten von Gradienten, die einen vorgegebenen Grenzwert überschreiten, wird in dem in Fig. 2 dargestellten zweiten Meßzweig ein entsprechender Meßzyklus ausgewählt.

Die besondere Bedeutung des ersten Meßzweigs 10 ergibt sich aus der Steuerungsfunktion für den isotopenspezifischen zweiten Meßzweig. Dabei werden insbesondere Sicherheitsüberlegungen, wie Redundanz und Stabilität, berücksichtigt, um für den zweiten Meßzweig eine optimale Ausnutzung, insbesondere hinsichtlich eines Höchstmasses an Information, einer Minimierung der Proben- und Abfallmenge sowie einer minimalen Dosisbelastung für das Personal, zu erzielen.

Die Meßdaten des kontinuierlichen ersten Meßzweiges 10 werden ständig von der zentralen Prozessoreinheit ausgewertet. Je nach Vorliegen konstanter Betriebsparameter oder dynamischer Betriebsparameter gelten für den isotopenspezifischen zweiten Meßzweig bestimmte Werte bezüglich Probennahmefrequenz, Probenvolumen, Probenmeßzeit, Auswerteroutinen und Probensicherung. Hierdurch stehen in jeder Betriebssituation alle relevanten Parameter kurzfristig zur Verfügung, wobei zusammen mit einem zweiten Meßzweig 46 bei konstanten Betriebsparametern ein bedienereingriffsfreier automatischer Betrieb von 3 bis 4 Tagen möglich ist.

In Fig. 2 ist ein Ausführungsbeispiel des zweiten Meßzweigs 46 in Form eines schematischen Blockschaltbildes dargestellt. Der zweite Meßzweig 46 dient zur automatischen quasi kontinuierlichen Ermittlung der nuklidspezifischen Aktivitätskonzentrationen von Edelgasen, Spalt- und Aktivierungsprodukten mit Hilfe von Probennahme, Probenaufbereitung und chemischer Nuklidseparation.

Der zweite Meßzweig 46 enthält insgesamt drei verschiedene Funktionsgruppen, nämlich einen Gamma-Analysemodul 48 für höchste Impulsraten, der in Fig. 2 durch die in der oberen Bildhälfte umstrichelten Einheiten dargestellt ist, ein automatisches Probenhandhabungsmodul 50, und eine zentrale Prozessoreinheit 52.

Der Gamma-Analysemodul 48 weist bei dem dargestellten Ausführungsbeispiel zwei gleichartig aufgebaute Meßkanäle 54 und 56 auf. Die Meßkanäle 54 und 56 weisen Reinstgermanium-Detektoren 58 und 60 auf, die in Meßkammern 62 bzw. 64 angeordnet sind und jeweils mit einem Vorverstärker 66 bzw. 68 verbunden sind. Die Reinstgermaniumdetektoren 58 und 60 stehen jeweils mit Spektroskopieverstärkern 70 bzw. 72 in Verbindung, die ihrerseits jeweils an rechnergesteuerten Multichannelbuffer 74 bzw. 76 angeschlossen sind. Die Spektroskopieverstärker 70 und 72 stehen jeweils mit Abschnitten 78 und 82 eines rechnergesteuerten Zählers 86 in Verbindung, während die Multichannelbuffer 74 bzw. 76 mit Abschnitten 80 bzw. 84 des rechnergesteuerten Zählers 86 verbunden sind. Die Multichannelbuffer 74 und 76 sind untereinander mit einer Datenaustauschleitung 88 verbunden.

Zu dem automatischen Probenhandhabungsmodul 50 gehören ein Probenbehältervorrat 90, eine Probenablage 92, ein rechnergesteuerter Probenroboter 94, eine Probenmanipulationskammer 96 mit Abzug, in der eine Abfallablage 98, eine rechnergesteuerte Dosiereinheit 100, bei Bedarf eine rechnergesteuerte Wägeeinheit 102 sowie eine rechnergesteuerte Dosiereinheit 104 angeordnet sind, wahlweise eine nicht dargestellte Probenpositionskontrolle sowie eine Kontrolleinheit 106 für die Probenaufarbeitung. Der Probenroboter 94 ist durch Rechnersteuerung in der Lage, den Probenbehältervorrat 90, die Probenablage 92 sowie die in der Probenmanipulationskammer mit Abzug angeordneten Stationen für Abfallablage, Dosiereinheiten und Wägeeinheit zur automatischen Probenhandhabung anzufahren.

Die Kontrolleinheit 106 ist über eine Datenleitung 108 mit der zentralen Prozessoreinheit 52 verbunden. Eine Datenleitung 110 verbindet die zentrale Prozessoreinheit 52 mit dem rechnergesteuerten Zähler 86 für die beiden Meßkanäle 54 und 56. Weiterhin ist eine Datenübertragungsleitung 112 vorgesehen, über die ein Datenaustausch zwischen der zentralen Prozessoreinheit 52 und den rechnergesteuerten Multichannelbuffern 74 bzw. 76 ermöglicht wird.

Die zentrale Prozessoreinheit 52 besteht aus einem Prozessrechner 114 mit zugehöriger Analysesoftware und Kontrollsoftware, einem Massenspeicher 116, Ausgabeeinheiten 118 sowie einem die einzelnen Aggregate innerhalb der Prozessoreinheit einander verbindenden Datenbus 120.

Bestandteile des zweiten Meßzweigs 46 sind die automatische Probenaufbereitung, deren Überwachung sowie die Alarmschwellen für die einzelnen Aktivitätsgruppen und die Systemtotzeit, deren Wert das Probenvolumen regelt. Die Meßdaten des kontinuierlichen ersten Meßzweigs 10 werden ständig von der zentralen Prozessoreinheit 52 ausgewertet. Je nach dem Vorliegen konstanter Betriebsparameter oder dynamischer Betriebsparameter gelten für den isotopenspezifischen zweiten Meßzweig 46 bestimmte Werte bezüglich Probennahmefrequenz, Volumen, Meßzeit, Auswerteroutinen und Probensicherung. Der zweite Meßkreis 46 ist bei dynamischen Betriebsparametern, wie Spikingeffekte, Laständerungen, Brennelementdefekte, etc. etwa auf 4 bis 10 Stunden automatischer Betriebsdauer ausgelegt. Gegenüber den üblichen Verfahren mit Handprobenahme ergibt sich eine verkürzte Reaktionszeit von 5 bis 10 Minuten gegenüber 2 bis 4 Stunden, sowie eine erhöhte Meßfrequenz von 1 pro 10 Minuten gegenüber 1 pro einigen Stunden. Die Ergebnisse werden dabei durch wertmäßigen Ausdruck oder graphisch dokumentiert. Ausgewählte Proben können zur Sicherung aufbewahrt werden, und Rohspektren werden abgespeichert, falls die Auswertung keine eindeutige Zuordnung aller Peaks liefert.

Eine Übersteuerung des zweiten Meßzweigs 46 infolge zu hoher Aktivitätskonzentration wird durch die folgenden beiden unabhängigen Systemeigenschaften vermieden. Erstens weist der Meßkanal 54 bzw. 56 eine Zählratendynamik mit einer maximalen Verarbeitungsrate von $10^6$ cps für Kobalt (Co-60) bei konstanter und identischer Meßzeit auf. Zweitens ist eine Systemtotzeitkontrolle vorgesehen, die bei Überschreiten eines vorgegebenen Grenzwertes eine Reduzierung des Probenvolumens auslöst.

Die tatsächliche Probenmenge kann durch Wägen exakt ermittelt und zur Dosierung der Chemikalien für die Abtrennung verwendet werden. Mit dieser wahlweisen Möglichkeit wird ein eventueller systematischer Fehler bei der Probenabfüllung ausgeschaltet und somit der Gesamtfehler reduziert.

Eine Kontamination des Meßplatzes oder eine Aktivitätserhöhung des Untergrundes wird einerseits durch Einwegbehälter und andererseits durch die Anordnung der Probenabfüllung, der Probenaufbereitung und der Abfallstation in der Probenmanipulationskammer mit Abzug vermieden.

Durch eine regelmäßig vorgesehene Nulleffektmessung werden externe Meßeinflüsse registriert, und bei Überschreiten eines Grenzwertes wird ein Alarm ausgelöst. Innerhalb des Toleranzbereichs für externe Einflüsse führen Nettozählraten zu Korrekturen für die entsprechenden Aktivitäten.

Es sind ferner im Rahmen der Ablaufsteuerung der Überwachung eine interne Überwachung der Systemkomponenten sowie zwischengeschaltete Kontrollfunktionen bzw. Vorrichtungen zur Erkennung von Ablauffehlern vorgesehen, wodurch der automatische Ablauf abgebrochen und ein Alarm ausgelöst wird. Falls eine Unterbrechung durch Stromausfall auftritt, ist zu dem eine Ermittlung des letzten Status und das Ausführen eines automatischen Neustarts vorgesehen.

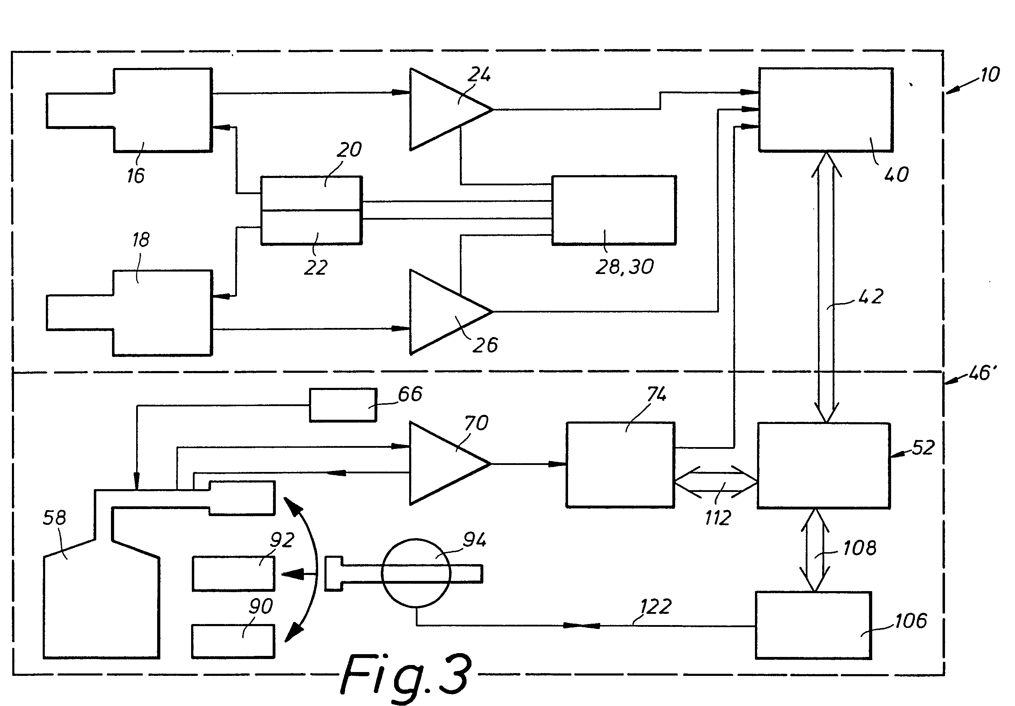

In Fig. 3 sind der erste Meßzweig 10 und der zweite Meßzweig 46 in einer geringfügig modifizierten Form in einem schematischen Blockschaltbild unter Verwendung der ursprünglichen Bezeichnungen zusammengestellt. Abweichend von Fig. 2 weist der zweite Meßzweig 46' nur den Meßkanal 54 auf. Weiterhin ist die auch schon bei der Fig. 2 vorhandene Verbindung zwischen dem rechnergesteuerten Probenroboter 94 und der Kontrolleinheit für die Probenaufarbeitung 106 durch eine Datenverbindungsleitung 122 dargestellt.

Nachfolgend wird nun der verfahrensmäßige Ablauf für die automatische nuklidspezifische Überwachung von aktiven und hochaktiven Flüssigkeiten näher erläutert. Aufgrund von kontinuierlichen Integralmessungen mit den Gamma-Detektoren 16 und 18 werden variable Regelparameter zur Steuerung des Ablaufs, nämlich der Probennahmefrequenz, des Probenvolumens, Meßzeit, Dosierung der Chemikalien in den Trennstationen, Probenverbleib (Abfall oder Archivierung) bestimmt. Die genannten Systemparameter werden vorzugsweise automatisch eingegeben, wobei auch eine manuelle Eingabe möglich ist.

Aufgrund eines Vergleichs der eingegebenen Daten mit vorbestimmten Grenzwerten, der in der zentralen Prozessoreinheit 52 vorgenommen wird, erfolgt die Aktivitätsanalyse entweder nach einem Standardzyklus oder bei Überschreitung der Grenzwerte in einem Sonderzyklus. Für den Sonderzyklus gelten Steuerparameter, die jeweils an die Abweichungen von den Normalwerten angepaßt werden.

In der nächsten Verfahrensstufe wird die Startzeit für die Zerfallskorrektur und den Zyklusbeginn festgelegt und an die zentrale Prozessoreinheit 52 gemeldet. Es erfolgt dann eine entsprechende Probenentnahme, Probenabfüllung und der Transport in die Meßkammer, z.B. 62, wobei eine Funktionskontrolle für die Meßbereitschaft der Meßkammer vorgesehen ist. Nach dem Messen wird die Probe automatisch abgeräumt.

Als nächstes wird die Impulsfrequenz gemessen, um die Blockierzeit des Systems zu ermitteln (Totzeitermittlung) und diese mit einem vorgegebenen Grenzwert zu vergleichen.

Es folgt dann der Beginn der Datenaufnahme (Spektrenaufnahme) und damit der aktuelle Meßzeitbeginn, wobei eine ständige Überwachung der Grenzwerte des Meßzweiges 10 vorgenommen wird.

Nach Vorliegen der Spektralwerte und deren Analyse erfolgt dann ein Grenzwertvergleich bezüglich der Edelgase, anschließend eine chemische Probenaufbereitung zur Separierung sowie eine Spektralanalyse.

Die entnommene Probe wird dann entweder abgelegt oder archiviert, oder es wird zur exakten Bestimmung weiterer Nuklidgruppen eine weitere chemische Abtrennung der Spaltprodukte durchgeführt, um die Probe auf die restlichen Aktivierungsprodukte zu analysieren. Die Analyse der Aktivierungsprodukte nach vorangegangener Abtrennung von Edelgasen sowie von Jod und Cäsium unterscheidet sich von dem bereits beschriebenen Ablauf dadurch, daß ein geringerer Probendurchsatz, geringere Aktivitäten, komplexe Spektren, ein Nulleffekteinfluß und lange Meßzeiten vorliegen. Bedingt durch diese Faktoren ist die für diese Analyse vorgesehene Meßkammer 64 so aufgebaut, daß eine optimale Nulleffektunterdrückung erreicht wird. Auch die Meßgeometrie wird im Hinblick auf die räumliche Zuordnung optimiert. Vor und nach jeder Messung wird ein Nulleffektspektrum aufgenommen, auf Nettopeakflächen analysiert und bei der Analyse des Probenspektrums berücksichtigt. Aufgrund des geringen Probendurchsatzes ist gewährleistet, daß eine Beeinflussung der Meßzweige durch die zusätzlichen Aufgaben der Kontrolleinheit und der zentralen Prozessoreinheit nicht stattfindet.

Während des gesamten Analysezyklus ist für jeden zu analysierenden Wert ein Grenzwertvergleich und die Abgabe eines Alarmsignals bei Überschreiten von Grenzwerten vorgesehen. Innerhalb des Zyklus sind geeignete Wiederholungen von Verfahrensabschnitten vorgesehen, um eine schnelle Überprüfung von Meßwerten zu ermöglichen.

Die Erfindung ermöglicht aufgrund der Kombination von kontinuierlicher Gesamtgammaüberwachung und automatischer Probenauswertung für die quasi kontinuierliche nuklidspezifische Überwachung eine betriebsangepaßte Frequenz bei minimalen Proben- und Abfallvolumen, sowie vernachlässigbarer Personalbelastung. Dabei ist durch die chemische Probenaufbereitung sichergestellt, daß auch bei extrem unterschiedlichen Konzentrationen Nuklidgruppen mit geringerer Aktivität nicht von solchen mit hoher Aktivität verdeckt werden und daß eine Meßplatzkontamination vermieden wird. Die vorgesehenen Nulleffektmessungen und die automatische Qualitätsdokumentation konstanter Systemparameter, ermöglichen je nach Menge des Probenbehältervorrats ein wartungsfreier Betrieb von 1 bis 4 Tagen möglich ist. Dabei werden Grenzwertüberschreitungen als Störung gemeldet und lösen eine Rücksetzung in einen definierten und gesicherten Zustand aus. Bei Wiederinbetriebnahme wird vom letzten korrekten Status aus eine definierte Startsituation eingestellt und der Ausfall dokumentiert. Die Erfindung eignet sich somit für die nuklidspezifische Überwachung aktiver und hochaktiver Flüssigkeiten sowohl auf statische als auf sich dynamisch verändernde Aktivitätskonzentration, wie beispielsweise Primärkühlmittel von Kernkraftwerken, Chemikalien zur Brennstoffaufbereitung oder Flüssigabfall. Hierfür sind die vorgesehenen chemischen Trennvorgänge, die Selbstüberwachung des Analyseablaufs und die automatische Anpassung der Meßfrequenz an die aktuelle Betriebssituation wesentlich. Dabei ermöglicht die hohe Präzision der Probennahme variable und minimale Probenvolumen und damit eine erhebliche Reduktion von Personaldosis und Abfallvolumen. Die vorgesehene Kombination von kontinuierlicher Messung mit zustandsabhängiger Probennahme, die Betriebssicherheit aufgrund eines speziellen, für Eignungsprüfungen entwickelten Steuerprogramms, die modulare Analyseelektronik mit besonders großem dynamischen Bereich sowie die probenspezifische chemische Aufbereitung zur Isolierung relevanter Isotopengruppen ermöglichen eine zuverlässige und sichere automatische nuklidspezifische Überwachung aktiver und hochaktiver Flüssigkeiten.

**Patentansprüche**

1. Verfahren zur nuklidspezifischen Überwachung aktiver und hochaktiver Flüssigkeiten, insbesondere des Primärkühlmittels von Siede- und Druckwasserreaktoren, bei dem die Aktivitätskonzentration der Flüssigkeit direkt gemessen wird, dadurch gekennzeichnet, daß abhängig von den kontinuierlich ermittelten Gesamtgammawerten Parameter zur Steuerung eines Probenahmeablaufs bestimmt werden, daß die Parameter mit vorgegebenen Grenzwerten verglichen werden und daraus der Zyklus einer nuklidspezifischen Analyse bestimmt wird und daß Flüssigkeitsproben automatisch entnommen, gehandhabt, chemisch separiert und ausgewertet werden.

2. Verfahren nach Anspruch 1, dadurch gekennzeichnet, daß bei jeder nuklidspezifischen Analyse automatisch folgende Verfahrensschritte durchgeführt werden: Abnehmen und Aufbereiten einer Flüssigkeitsprobe, nuklidspezifische Aktivitätsmessung der Flüssigkeitsprobe, Auswertung von ermittelten Spektren, Dokumentation der Meßwerte und Probenablage.

3. Verfahren nach Anspruch 1 oder 2, dadurch gekennzeichnet, daß für die nuklidspezifische Analyse die Probenahmefrequenz, das Probevolumen, die Meßzeit, die Dosen der separierenden Chemikalien sowie der Probenverbleib automatisch bestimmt werden.

4. Verfahren nach einem der vorangehenden Ansprüche, dadurch gekennzeichnet, daß die Messung der Aktivitätsmengen bzw. -konzentration der Flüssigkeit mit wenigstens einem Gamma-Detektor an einer Probenahmeleitung vorgenommen wird.

5. Verfahren nach einem der vorangehenden Ansprüche, dadurch gekennzeichnet, daß zur präzisen Bestimmung der Probenaktivität Untergrund-Nettoaktivitäten subtrahiert werden.

6. Verfahren nach einem der Ansprüche 2 bis 5, dadurch gekennzeichnet, daß zur eindeutigen Nuklidzuordnung eine Nuklidsubtration überlappender Peaks oder Peaks mit identischer Energie vorgenommen wird.

7. Verfahren nach einem der Ansprüche 3 bis 6, dadurch gekennzeichnet, daß jede automatische zyklische Aktivitätsanalyse zentral gesteuert wird.

8. Verfahren nach einem der vorangehenden Ansprüche, dadurch gekennzeichnet, daß die Ergebnisse der Aktivitätsanalysen durch wertmäßigen Ausdruck oder graphisch dokumentiert werden.

9. Verfahren nach einem der vorangehenden Ansprüche, dadurch gekennzeichnet, daß jede Aktivitätsanalyse mit einer Systemtotzeit vorgenommen wird, nach der die automatische Probenaufbereitung und deren Überwachung, eine Alarmschwellenüberwachung für die einzelnen Aktivitätsgruppen und die Größe des Probevolumens geregelt wird.

10. Verfahren nach einem der vorangehenden Ansprüche, dadurch gekennzeichnet, daß die nuklidspezifische Analyse bei Ermittlung von zulässigen Aktivitätsmeßwerten in einem Standarzyklus und bei bestimmten grenzwertüberschreitenden Aktivitätsmeßwerten in einem Sonderzyklus mit entsprechend angepaßten Parametern durchgeführt wird.

11. Verfahren nach einem der vorangehenden Ansprüche, dadurch gekennzeichnet, daß bei der nuklidspezifischen Analyse in einer ersten Meßphase die Hauptnuklidgruppe gemessen und danach durch Zugabe der Reagenzien mit definiertem Volumen chemisch abgetrennt wird, wobei die Reagenzien und ihre Dosierungen entsprechend der angestrebten Wirkung und der Reaktionszeit ausgewählt werden, und daß in einer zweiten Meßphase die Aktivitäten der Spaltprodukte, insbesondere Cäsium und Jod, sowie bereits identifizierbare Aktivierungsprodukte bestimmt werden, wobei erforderlichenfalls zur exakten Bestimmung weiterer Nuklidgruppen eine chemische Abtrennung der Spaltprodukte durchgeführt und die restlichen Nuklide der Probe analysiert werden.

12. Verfahren nach einem der vorangehenden Ansprüche, dadurch gekennzeichnet, daß zur Registrierung externer Einflüsse regelmäßige Nulleffektmessungen durchgeführt werden und daß bei Überschreiten eines bestimmten Grenzwertes ein Alarm ausgelöst wird.

13. Vorrichtung zur Durchführung des Verfahrens nach Anspruch 1, mit einem ersten Meßzweig (10) für die direkte Messung der Gesamtgammaaktivität des in einer Leitung (12) fließenden Primärkühlmittels, gekennzeichnet durch einen zweiten Meßzweig (46, 46'), für die automatische zyklische Ermittlung der nuklidspezifischen Aktivitätskonzentrationen von Edelgasen, Spalt- und Aktivierungsprodukten in entnommenen, aufbereiteten und chemische separierten Proben und durch eine zentrale Prozessoreinheit (52) für die Ablaufsteuerung des zweiten Meßzweiges (46, 46') in Abhängigkeit von den durch den ersten Meßzweig (10) ermittelten Meßwerten.

14. Vorrichtung nach Anspruch 13, dadurch gekennzeichnet, daß der erste Meßzweig (10) wenigstens einen Gamma-Detektor (16, 18) mit einer zugeordneten Hochspannungsversorgung (20, 22), einem Impulsverstärker (24, 26) einer Stabilisierungseinheit (28, 30) mit Fensterdiskriminator, und einem Fensterdiskriminator (32, 34) für die Aktivitätsbestimmung sowie einen rechnergesteuerten Zähler (36, 38, 40) aufweist.

15. Vorrichtung nach Anspruch 13 oder 14, dadurch gekennzeichnet, daß der zweite Meßzweig (46, 46') einen Gamma-Analyse-Modul (48) und ein automatisches Probenhandhabungsmodul (50) aufweist, die mit der zentralen Prozessoreinheit (52) verbunden sind.

16. Vorrichtung nach Anspruch 15, dadurch gekennzeichnet, daß der Gamma-Analysemodul (48) wenigstens einen Meßkanal (54, 56) aufweist, wobei zu jedem Meßkanal ein Reinstgermaniumdetektor (58, 60) mit Vorverstärker, eine Meßkammer (62, 64), eine Hochspannungseinheit (66, 68), ein Spektroskopieverstärker (70, 72) sowie ein rechnergesteuerter Multichannelbuffer (74, 76) gehören und wobei der Gamma-Analysemodul (48) einen rechnergesteuerten Zähler (86) aufweist.

17. Vorrichtung nach Anspruch 15 oder 16, dadurch gekennzeichnet, daß zu dem automatischen Probenhandhabungsmodul (50) gehören:

ein Probenbehältervorrat (90), eine Probenablage (92), ein rechnergesteuerter Probenroboter (94), eine Probenmanipulationskammer mit Abzug (96), eine Abfallage (98), rechnergesteuerte Dosiereinheiten (100), wahlweise eine rechnergesteuerte Wägeeinheit (102) sowie eine Kontrolleinheit (106) für die Probenaufbereitung.

18. Vorrichtung nach einem der Ansprüche 15 bis 17, dadurch gekennzeichnet, daß die zentrale Prozessoreinheit (52) aus einem Prozessrechner (114), einem Massenspeicher (116) und Ausgabeeinheiten (118) besteht.

19. Vorrichtung nach einem der Ansprüche 13 bis 17, dadurch gekennzeichnet, daß der zweite Meßzweig (46, 46') einen Meßkanal (54, 56) mit einer Zählraten-Dynamik besitzt, die eine maximale Verarbeitungsrate von $10^6$ cps für Kobalt (Co-60) bei konstanter und identischer Meßzeit hat.

20. Vorrichtung nach einem der Ansprüche 13 bis 19, dadurch gekennzeichnet, daß der zweite Meßzweig (46) einen ersten Meßkanal (54) für die Messung der Hauptnuklidgruppe und chemisch aus der Probe abgetrennte Spaltprodukte und einen zweiten Meßkanal (56) zur exakten Bestimmung chemisch weiter abgetrennter Nuklide aufweist.

21. Vorrichtung nach einem der Ansprüche 13 bis 20, dadurch gekennzeichnet, daß eine Systemtotzeitkontrolle für das Auslösen einer Reduzierung des Probenvolumens bei Überschreiten eines vorgegebenen Grenzwertes vorgesehen ist.

## Claims

1. Method for the nuclide-specific monitoring of active and highly active liquids, particularly the primary coolant of boiling- and pressurized-water reactors, in which method the activity concentration of the liquid is measured directly, characterized in that parameters for controlling a sampling sequence are determined in dependence on the continuously determined total gamma values, in that the parameters are compared with predetermined limit values and from these the cycle of a nuclide-specific analysis is determined and in that liquid samples are automatically taken, handled, chemically separated and analyzed.

2. Method according to Claim 1, characterized in that in each nuclide-specific analysis, the following method steps are automatically carried out: taking and preparing a liquid sample, nuclide-specific activity measurement of the liquid sample, analysis of spectra determined, documentation of the measurement values and sample deposition.

3. Method according to Claim 1 or 2, characterized in that the sampling frequency, the sample volume, the measuring time, the doses of the separating chemicals and the disposal of the samples are automatically determined for the nuclide-specific analysis.

4. Method according to one of the preceding Claims, characterized in that the activity quantities or concentration of the liquid are measured by means of at least one gamma detector on a sampling line.

5. Method according to one of the preceding Claims, characterized in that background net activities are subtracted for accurately determining the sample activity.

6. Method according to one of Claims 2 to 5, characterized in that a nuclide subtraction of overlapping peaks or peaks having identical energy is carried out for unambiguous nuclide allocation.

7. Method according to one of Claims 3 to 6, characterized in that each automatic cyclic activity analysis is centrally controlled.

8. Method according to one of the preceding Claims, characterized in that the results of the activity analyses are documented by printing out values or graphically.

9. Method according to one of the preceding Claims, characterized in that each activity analysis is carried out with a system dead-time in accordance with which the automatic sample preparation and its monitoring, an alarm threshold monitoring for the individual activity groups and the size of the sample volume is regulated.

10. Method according to one of the preceding Claims, characterized in that the nuclide-specific analysis during the determination of permissible activity measurement values is carried out in a standard cycle and, with certain limit-value-exceeding activity measurement values, in a special cycle with correspondingly adapted parameters.

11. Method according to one of the preceding Claims, characterized in that in the nuclide-specific analysis, the main nuclide group is measured in a first measuring phase and thereafter chemically separated by adding the reagents with defined volume, the reagents and their dose rates being selected in accordance with the desired effect and the reaction time, and in that the activities of the fission products, particularly ceasium and iodine and already identifiable activation products are determined in a second measuring phase, a chemical separation of the fission products being carried out, if necessary, for accurately determining further nuclide groups and the remaining nuclides of the sample being analyzed.

12. Method according to one of the preceding Claims, characterized in that regular null-effect measurements are carried out for registering external influences and in that an alarm is triggered if a particular limit value is exceeded.

13. Device for carrying out the method according to Claim 1, with the first measuring branch (10) for the direct measurement of the total gamma activity of the primary coolant flowing in a line (12), characterized by a second measuring branch (46, 46') for the automatic cyclic determination of the nuclide-specific activity concentrations of noble gases, fission and activation products in samples which have been taken, prepared and chemically separated, and by a central processor unit (52) for controlling the sequence of the second measuring branch (46, 46') in dependence on the measurement values determined by the first measuring branch (10).

14. Device according to Claim 13, characterized in that the first measuring branch (10) exhibits at least one gamma detector (16, 18) with an associated high-voltage supply (20, 22), a pulse amplifier (24, 26), a stabilizing unit (28, 30) with window discriminator, and a window discriminator (32, 34) for determining the activity and a computer-controlled counter (36, 38, 40).

15. Device according to Claim 13 or 14, characterized in that the second measuring branch (46, 46') exhibits a gamma analysis module (48) and an automatic sample handling module (50) which are connected to the central processor unit (52).

16. Device according to Claim 15, characterized in that the gamma analysis module (48) exhibits at least one measuring channel (54, 56), an ultra-pure germanium detector (58, 60) with preamplifier, a measuring chamber (62, 64), a high-voltage unit (66, 68), a spectroscopic amplifier (70, 72) and a computer-controlled multi-channel buffer (74, 76) belonging to each measuring channel and the gamma analysis module (48) exhibiting a computer-controlled counter (86).

17. Device according to Claim 15 or 16, characterized in that the automatic sample handling module (50) includes:

a sample container supply (90), a sample repository (92), a computer-controlled sample robot (94), a sample manipulation chamber with exhaust (96), a waste repository (98), computer-controlled dosing units (100), optionally a computer-controlled weighing unit (102) and a control unit (106) for the sample preparation.

18. Device according to one of Claims 15 to 17, characterized in that the central processor unit (52) consists of a process computer (114), a mass storage unit (116) and output units (118).

19. Device according to one of Claims 13 to 17, characterized in that the second measuring branch (46, 46') has a measuring channel (54, 56) having a dynamic counting rate range which has a maximum processing rate of $10^6$ cps for cobalt (Co 60) with a constant and identical measuring time.

20. Device according to one of Claims 13 to 19, characterized in that the second measuring branch (46) exhibits a first measuring channel (54) for measuring the main nuclide group and fission products chemically separated from the sample and a second measuring channel (56) for accurately determining further chemically separated nuclides.

21. Device according to one of Claims 13 to 20, characterized in that a system dead-time check is provided for triggering a reduction in the sample volume when a predetermined limit value is exceeded.


**Revendications**

1. Procédé de surveillance spécifique, du point de vue nucléides, de liquides actifs et hautement actifs, en particulier du réfrigérant primaire de réacteurs à eau bouillante et à eau sous pression, dans lequel la concentration d'activité du fluide est mesurée directement, caractérisé par le fait que des paramètres pour la commande d'un processus de prélèvement d'échantillons sont déterminés en fonction des valeurs gamma totales déterminées en continu, que les paramètres sont comparés à des valeurs limites prédéfinies, que le cycle d'une analyse spécifique du point de vue nucléides est déterminé à partir de ces comparaisons et que des échantillons de liquide sont automatiquement prélevés, manipulés, séparés chimiquement et évalués.

2. Procédé selon revendication 1, caractérisé par le fait que, pour chaque analyse spécifique du point de vue nucléides les phases de procédé ci-après sont exécutées automatiquement: prélèvement et préparation d'un échantillon de liquide, mesure de l'activité spécifique du point de vue nucléides de l'échantillon de liquide, évaluation des spectres détectés, documentation des valeurs mesurées, et mise en dépôt des échantillons.

3. Procédé selon revendication 1 ou 2, caractérisé par le fait que pour l'analyse spécifique du point de vue nucléides on détermine automatiquement la fréquence de prélèvement d'échantillon, le volume des échantillons, la durée de la mesure, les doses des produits chimiques séparés, ainsi que la destination des échantillons.

4. Procédé selon l'une des revendications précédentes, caractérisé par le fait que la mesure des quantités ou concentrations d'activité du liquide se fait à l'aide d'au moins un détecteur gamme sur une ligne de prélèvement d'échantillons.

5. Procédé selon l'une des revendications précédentes, caractérisé par le fait que, pour une détermination précise de l'activité des échantillons, on soustrait les activités nettes de fond.

6. Procédé selon l'une des revendications 2 à 5, caractérisé par le fait que, pour une affectation précise des nucléides, on effectue une soustraction du point de vue nucléides, des pics en chevauchement ou de pics d'énergie identique.

7. Procédé selon l'une des revendications 3 à 6, caractérisé par le fait que chacune des analyses automatiques et cycliques d'activité est commandée centralement.

8. Procédé selon l'une des revendications précédentes, caractérisé par le fait que les résultats d'analyse d'activité sont documentés graphiquement ou par l'impression des valeurs.

9. Procédé selon l'une des revendications précédentes, caractérisé par le fait que chaque analyse d'activité est faite avec un temps mort système d'après lequel sont asservies la préparation automatique des échantillons et leur surveillance, une surveillance des seuils d'alarme pour les différents groupes d'activité et le volume des échantillons.

10. Procédé selon l'une des revendications précédentes, caractérisé par le fait que l'analyse spécifique du point de vue nucléides est exécutée suivant un cycle standard en cas de détermination de valeurs de mesure d'activité admissibles et suivant un cycle spécial avec des paramètres adaptés en conséquence en cas de valeurs de mesure d'activité dépassant des valeurs limites déterminées.

11. Procédé selon l'une des revendications précédentes, caractérisé par le fait que pour l'analyse spécifique du point de vue nucléaides, dans une première phase de mesure, on mesure le groupe principal des nucléides et on le sépare ensuite chimiquement, par addition de réactifs de volumes définis, les réactifs et leur dosage étant choisis en fonction de l'effet recherché et des temps de réaction et que, dans une deuxième phase de mesure, on détermine les activités des produits de fission, particulièrement césium et iode, ainsi que des produits d'activation déjà identifiables, une séparation chimique des produits de fission étant si besoin exécutée pour la détermination exacte d'autres groupes de nucléides et les nucléides restants de l'échantillon étant analysés.

12. Procédé selon l'une des revendications précédentes, caractérisé par le fait que l'on effectue régulièrement des mesures à effet nul pour l'enregistrement des influences extérieures et qu'une alarme est déclenchée si une valeur limite déterminée est dépassée.

13. Dispositif pour la mise en oeuvre du procédé selon revendication 1, ayant un premier circuit de mesure (10) pour la mesure directe continue de l'activité gamma totale d'un réfrigérant primaire circulant dans une conduite (12) caractérisé par un deuxième circuit de mesure (46, 46') pour la détection cyclique automatique des concentrations d'activité spécifiques du point de vue nucléides, de gaz nobles, de produits de fission et d'activation dans des échantillons prélevés, préparés et séparés chimiquement, et par une unité centrale de traitement (52) pour la commande séquentielle du deuxième circuit de mesure (46, 46') en fonction des valeurs de mesure déterminées par le premier circuit de mesure (10).

14. Dispositif selon revendication 13, caractérisé par le fait que le premier circuit de mesure (10) présente au moins un détecteur gamma (16, 18) avec une alimentation (20, 22) haute tension associée, un amplificateur d'impulsions (24, 26), une unité de stabilisation (28, 30) avec discriminateur à fenêtre, et un discriminateur à fenêtre (32, 34) pour la détermination de l'activité, ainsi qu'un compteur (36, 38, 40) commandé par ordinateur.

15. Dispositif selon revendication 13 ou 14, caractérisé par le fait que le deuxième circuit de mesure (46, 46') présente un module d'analyse gamma (48) et un module (50) de manipulation automatique des échantillons qui sont connectés à l'unité de traitement centrale (52).

16. Dispositif selon revendication 15, caractérisé par le fait que le module d'analyse gamma (48) présente au moins un canal de mesure (54, 56), avec pour chaque canal, un détecteur au germanium extra-pur (58, 60) avec pré-amplificateur, une chambre de mesure (52, 64), une unité haute tension (66, 68), un amplificateur spectroscopique (70, 72) ainsi qu'une mémoire-tampon à canaux multiples (74, 76) commandée par ordinateur, le module d'analyse gamma présentant un compteur (86) commandé par ordinateur.

17. Dispositif selon revendication 15 ou 16, caractérisé par le fait que le module (50) de manipulation automatique des échantillons comporte:

un magasin de récipients à échantillons (90), un dépôt d'échantillons (92), un robot (94) à échantillons commandé par ordinateur, une chambre de manipulation des échantillons avec extraction (96), un dépôt de déchets (98), des unités de dosage (100) commandées par ordinateur, éventuellement une unité de contrôle (106) pour la préparation des échantillons.

18. Dispositif selon l'une des revendications 15 à 17, caractérisé par le fait que l'unité de traitement centrale (52) est composée d'un processeur (115), d'une mémoire de masse (116) et d'unités de sortie (118).

19. Dispositif selon l'une des revendications 13 à 17, caractérisé par le fait que le deuxième circuit de mesure (46, 46') possède un canal de mesure (54, 56) avec une dynamique de taux de comptage présentant une vitesse de traitement maximale de $10^6$ cps pour le cobalt (Co$^{-60}$) pour un temps de mesure constant et identique.

20. Dispositif selon l'une des revendications 13 à 19, caractérisé par le fait que le deuxième circuit de mesure (46) présente un premier canal de mesure (54) pour la mesure du groupe principal de nucléides et de produits de fission séparés chimiquement de l'échantillon, et un deuxième canal de mesure (56) pour la détermination exacte d'autres nucléides séparés chimiquement.

21. Dispositif selon l'une des revendications 13 à 20, caractérisé par le fait qu'il est prévu un contrôle de temps mort système pour le déclenchement d'une diminution du volume de l'échantillon au dépassement d'une valeur limite prédéfinie.

Fig.1

EP 0 198 342 B1

Fig.2

*Fig.3*

EP 0 198 342 B1